Europäisches Patentamt

European Patent Office

Office européen des brevets

(19)

(11) Publication number: **0 084 228**
**A2**

# EUROPEAN PATENT APPLICATION

(12)

(21) Application number: **82306515.6**

(22) Date of filing: **07.12.82**

(51) Int. Cl.³: **H 04 N 1/46**
**G 06 F 15/20**

(30) Priority: **07.12.81 US 327992**

(43) Date of publication of application:
**27.07.83 Bulletin 83/30**

(84) Designated Contracting States:
**DE GB**

(71) Applicant: **XEROX CORPORATION**
**Xerox Square - 020**
**Rochester New York 14644(US)**

(72) Inventor: **Roetling, Paul G.**
**468 Ontario on the Lake**
**Ontario New York 14519(US)**

(72) Inventor: **Knox, Keith T.**
**130 Beacon Hills Drive, S.**
**Penfield New York 14526(US)**

(74) Representative: **Weatherald, Keith Baynes et al,**
**European Patent Attorney Rank Xerox Patent**
**Department 338 Euston Road**
**London NW1 3BH(GB)**

(54) **Digital color modification.**

(57) A digital display system including a memory containing digital representations of a three color component color image connected through a network of look-up tables and summing circuits to the red, green and blue display drivers of a suitable display. In particular, a first summing circuit is connected to the red display driver, a second summing circuit is connected to the green display driver, and a third summing circuit is connected to the blue display driver. Three look-up tables are connected to the red digital representation in memory with one of the look-up tables being connected to the first summing circuit, another of the look-up tables being connected to the second summing circuit and the third look-up table being connected to the third summing circuits. In a similar manner, groups of three look-up tables are connected to the green and blue digital representations and each look-up table of each group in turn connected to a different summing circuit. The result is nine look-up tables cross-coupled to three summing circuits to provide selected color adjustments and transformations.

FIG. 3

0084228

## DIGITAL COLOR MODIFICATION

This invention relates to color adjustment of images, and in particular to real time color adjustment of digital images for display or printing.

The display art contains many image display processors such as the DeAnza Systems IP5000 Image Processor, the Spatial Data Systems Model 108PTC, the Grinnell GMR-270 Image Processing System, and the Comtal Vision 110 Image Processor. These display processors contain various elements such as a display device, a large digital memory to hold an image, and relatively small look-up tables to modify the image.

In the printing art, it is also known to use masking for color correction in order to provide accurate color reproduction. In this method, negatives and positives of various contrasts, made with appropriate filters, are combined with each other to produce color corrected separations. In particular, a positive or negative image made with one filter is combined with a negative or positive image made with a different filter. One of these images can be the original itself, seen through a color filter, or an optical image of it. The prior art is replete with methods of color correction and display. For example, U.S. Patent 3,674,364 discloses a means for evaluating color transparencies to determine the desired color correction by summing signals contributing to a particular color for each color channel. U.S. Patent 4,154,523 discloses an exposure control means wherein a set of coefficient signals corresponds to a three dimensional color reference system responsive to density signals of the three colors. The coefficient signals are modified to create signals representing matrix values customized to the original density characteristics. U.S. Patent 3,144,510 teaches apparatus for compressing color images and in particular in using standard equation color coordinates to manipulate the image. These techniques, however, are generally directed to color correcting a picture.

With regard to the display and printing art, there are generally two methods of providing real time adjustment of digital images. The first method, used in display systems, provides look-up tables only for each color separation. Typical of this method are the commercial image display processors referred to above. This method gives some flexibility, similar to contrast and exposure control for each separation when printing; but even a simple operation like showing a luminance image cannot be done using look-up tables, without changing the image in memory.

The second method of adjustment of digital color images used in color correction and display is to provide a single look-up table large enough to handle the modifications. Unfortunately, the size, cost and complexity of the tables makes it impractical to handle full precision. If the memory stored eight bits per pixel (picture element) per color, the look-up table would be 24 bits in and 24 bits out for a 3 color system. This is 48 megabytes, exceeding the capacity of practical memory systems. It is possible to reduce the number of bits/pixel/color to reduce the memory size, but this results in less accurate displays. Such display systems are known in the prior art, for example, LEXIDATA image display systems. Refer also to U.S. Patent No. 4,236,809 issued December 2, 1980 and assigned to the same assignee as the present invention, for a printing application of the method.

It would be desirable, therefore, to provide a flexible, inexpensive technique for the color adjustment of digital images. It is an object, therefore, to provide a new and improved color modification technique, and in particular a technique that is flexible and requires a minimum of table look-up memory space in color modifying a displayed digital image. Further advantages of the present invention will become apparent as the following description proceeds and the features characterizing the invention will be pointed out with particularity in the claims annexed to and forming a part of this specification.

Briefly, the present invention is a digital display system including a memory containing representations of three components of a color image (for convenience, these three components are referred to as red, green and blue photographic separation signals, although it should be noted that other representations are suitable such as the standard Y, I and Q television color signals). The three components are connected through a network of look-up tables and summing circuits to the red, green and blue display drivers of a suitable display. In particular, a first summing circuit is connected to the red display driver, a second summing circuit is connected to the green display driver and a third summing circuit is connected to the blue display driver. Three look-up tables are connected to the red digital representation in memory with one of the look-up tables being connected to the first summing circuit, another of the look-up tables being connected to the second summing circuit and the third look-up table being connected to the third summing circuit. In a similar manner, groups of three look-up tables are connected to the green and blue digital representations and each look-up table of each group in turn connected to a different summing circuit. The result is nine look-up tables cross-coupled to three summing circuits to provide selected color adjustments and transformations.

For a better understanding of the present invention, reference may be had to the accompanying drawings, wherein the same reference numerals have been applied to like parts and wherein;

Figure 1 is a typical known color display system;

Figure 2 is a typical known look-up table in a color display system; and

Figure 3 is a schematic of a digital color adjustment system in accordance with the present invention.

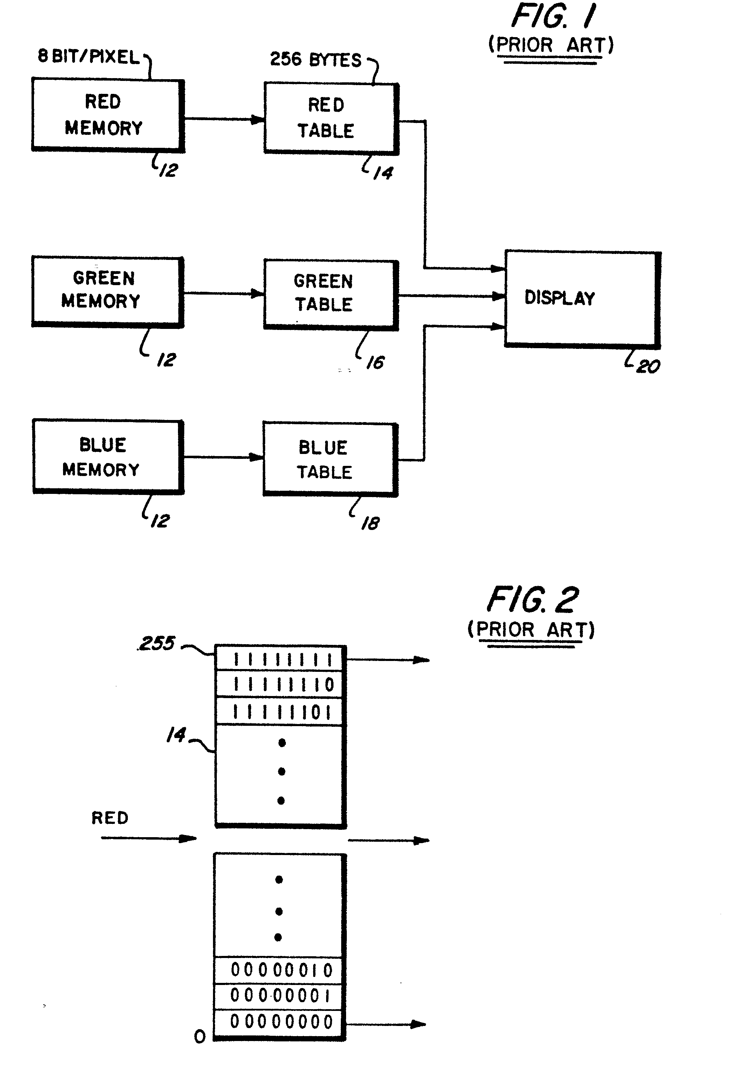

Referring now to the drawings, there is illustrated in Figure 1 a prior art color display system. The memory 12, represented by red, green and blue sections, is a typical memory to store the digital representation of a color image. Each pixel is represented by 24 bits, 8 bits for each of the red, blue and green colors. Assuming the image is represented by a 512 x 512 matrix of pixels, a memory of approximately 3/4 million bytes or 6 million bits is required. There are three look-up tables, 14, 16, and 18 interconnecting the memory 12 to a display 20. In particular, a look-up table is provided for each discrete color of the image stored in memory 12.

A typical prior art look-up table is shown in Figure 2. It is divided into 256 elements, one for each grey level per color. Each grey level is represented by an 8 bit word or byte. The 256 bytes are arranged in order of grey level. Thus, the byte 0000,0000 would represent a 0 level grey level and the byte 1111,1111 would represent the high intensity grey level for that particular color. The look-up table shown in Figure 2 represents a unit multiplication, that is, every output value resulting from a look-up operation is equal to the input value. Other multiplications and even non-linear functions can be represented by appropriate choice of table entries.

In operation, to display a particular pixel, a particular byte for a particular pixel defines a particular grey level slot for one of the look-up tables. For example, 24 bits of the pixel would identify successively a red level, a blue level and a green level in each of the look-up tables 14, 16 and 18.

Each level of each of the look-up tables in turn modulates a particular display driver corresponding to the table. That is, the red look-up table 14 would activate a red display driver, the blue look-up table 16 would activate a blue display driver, and the green look-up table 18 would activate the green display driver. Each of the display drivers activates a particular color in display 20. The red, green and blue are color separations and the levels identified by the look-up tables are the intensities within that particular color separation.

To better understand color correction and modification, it is necessary to distinguish among several terms designating different aspects of the perception of patches of light. This distinction is explained in Visual Perception by Tom N. Cornsweet. In particular, he states that the word hue refers to that aspect of perception commonly called "color"; for example "redness" or "greenish-yellowishness". Hue is the aspect that changes most strongly when the wavelength of the stimulus is changed. Brightness is that aspect of the perception of a patch of light that varies most strongly when its intensity is changed. Saturation refers to the purity of a hue. For example, scarlet is more saturated than pink. Saturation is the aspect that changes most strongly when white light is added to a monochromatic patch. (When the wavelength of a patch of light is changed while its intensity is held constant, its hue changes, but its saturation and brightness will generally change too. Similarly, when the intensity is changed, all three attributes generally change. Thus, definitions given cannot be made precise.) The term color refers to the overall effect of the stimulus, that is, its hue, saturation, and brightness. Thus, two patches may be said to differ in color even if their hues are the same.

The fact that these three different aspects of the perception of light are so frequently distinguished from each other implies that the distinctions among them are useful. On the other hand, since we always experience all three simultaneously when we see a patch of light, it seems very difficult to clarify the distinctions among them, and thus to establish a firm base upon which they may be related to the physiology of the visual system. However, there is a set of psychophysical experiments, called "matching", in which observers match one variable while others are held fixed, that greatly aid in making the distinction between hue and brightness more rigorous.

In summary of the matching experiments, in Visual Perception, it is stated that when two patches are different in wavelength, equal brightness settings are unreliable, whereas when they are different in intensity, equal hue settings are highly reliable. To put it very generally, it is extremely hard to judge the relative brightnesses of different hues, but it is easy to judge hue, regardless of brightness.

From the preceding discussion of the perception of light, it can be appreciated that the easy way to adjust a color image would be to adjust one perceptual variable at a time. One system that approximates the adjustment of one perceptual variable at a time is color television. In a color TV set, turning the "color level" knob off results in receiving only a black and white picture. In effect, it results in seeing the luminance or general brightness of the picture. The brightness can, therefore, be adjusted independently. With the color back on, the knob labeled "hue" or "tint" is used to adjust the hue perception. Finally, saturation or color contrast is adjusted with a knob usually labeled "color level".

To accomplish such simple adjustment, the first need is for a simple technique to be able to easily convert a digital color image to a digital black and white image to make brightness and contrast modifications by changing the values in the look-up tables. Then, it is important to be able to easily return to the original color image to modify the image for color contrast and hue, again by changing values in the look-up tables. It should be noted that many other manipulations may be desired. The simple example of showing a luminance image is used to illustrate the improvement of the present invention over prior systems. In the following, we define luminance, then show why prior art systems cannot fulfill this need and how the present invention provides a solution.

The luminance of a three-color signal can be generally represented by the following formula:

Luminance = 0.3 red + 0.6 green + 0.1 blue.

The significance of the numbers 0.3, 0.6 and 0.1 is that these numbers are the correct proportion of those particular colors to observe a black and white image whose "brightnesses" match those of the color image. The three numbers are indications of how sensitive the eye is to the colors blue, green and red. The eye is very sensitive to green and therefore a bright green signal would show up as a very bright object. A red signal of equal value would be observed at only half the level of brightness of green. This means that if equal signals of red, green and blue are combined, there will not be three times the brightness because the green will be modified by 0.6, the red by 0.3 and the blue by 0.1. This is a phenomenon of the eye. Put in as much red as green, and the red appears only 50 percent as bright as the green.

Luminance, therefore, is a measure of what the eye sees. The formula is an indication of how much gray will be on the color TV set display if the color is turned off.

In the prior art digital systems, it is very difficult to adjust the relative color or hue and still maintain the same luminance or image brightness by changes in the look-up tables. If, for example, an adjustment is made to red table 14 to correct for the brightness of the red, the black and white contrast and brightness and the color hue and contrast are all going to change, making adjustment very difficult.

With the look-up tables in Figure 1, it is not possible to turn the color off without completely changing the values in the memory 12. The system is basically locked into the color separation unless each of the pixels, approximately 3/4 million, is changed in the memory 12. In other words, it would be desirable to be able to simply adjust the look-up tables 14, 16 and 18, each with only 256 bytes of information to show the luminance image. This cannot be done in the system in Figure 1. The only way a black and white contrast adjustment can be made in Figure 1 is to calculate the luminance at each point and send that value to the red, green and blue display drivers. To do this, it is necessary to go into the memory 12, reading the red, green and blue for each point, calculating the luminance, and storing that value back into the red, green and blue memories. Unfortunately, if this is done, the original data in memory 12 are lost.

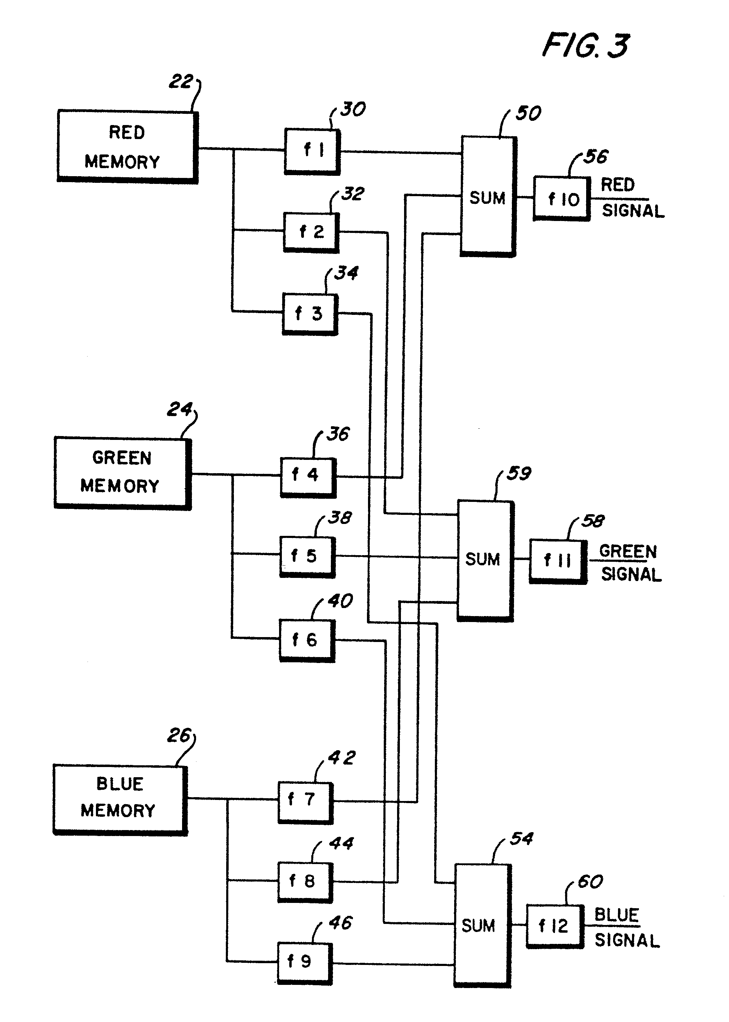

In accordance with the present invention, a simple solution is illustrated in Figure 3. In particular, a memory is shown having a red segment 22, a green segment 24 and a blue segment 26. The red memory segment 22 is connected to a first group of three look-up tables 30, 32 and 34. The green memory segment 24 is connected to a second group of three look-up tables, 36, 38 and 40, and the blue memory segment 26 is connected to another group of three look-up tables, 42, 44 and 46. It should be noted that the red, green and blue colors are merely exemplary and other combinations are contemplated for use in this invention such as the standard TV color signals.

Look-up table 30 is connected to a summing circuitry 50, look-up table 32 is connected to summing circuitry 52 and look-up table 34 is connected to summing circuitry 54. Also, each of the look-up tables 36, 38 and 40 connected to the green memory 24 and each of the look-up tables 42, 44, 46 connected to the blue memory 26, are cross-connected to the summing circuitries 50, 52, or 54. The effect is that the summing circuitry 50 related to the red memory 22 is also connected to a component from the green memory 24 and a component from the blue memory 26. In a similar manner, the summing circuitries 52, 54 are each connected to a component of the red memory, the green memory and the blue memory.

Thus, a composite signal is provided to the red, green and blue display drivers. The red display driver, for example, is provided with a combination of the red, green and blue signals. The red signal provided from circuitry 50 is the sum of the red memory signal through look-up table 30, the green memory signal through look-up table 36, and the blue memory signal through look-up table 42. Also, the portion of the signal that represents red is also a component for the green and blue signals.

The cross-coupling of the signals allows the look-up tables to provide matrix multiplication, giving

$$RED_{out} = f_1 (red_{in}) + f_4 (green_{in}) + f_7 (blue_{in})$$

$$GREEN_{out} = f_2 (red_{in}) + f_5 (green_{in}) + f_8 (blue_{in})$$

$$BLUE_{out} = f_3 (red_{in}) + f_6 (green_{in}) + f_9 (blue_{in})$$

where $f_1$-$f_9$ are the nine look-up tables. It should be noted that the matrix multiplication can be implemented by hardware multipliers as well as look-up tables. It should also be noted that the tables can be loaded with non-linear values.

This combination provides the power to perform most coordinate transformations. This allows easy color adjustment, as in a TV set, by setting up the luminance image, then adjusting color contrast or saturation, and finally adjusting hue.

For example, in the special case of adjusting a black and white signal, it is only necessary to load table 30, 32 and 34 with values 0.3 times the input. In a similar manner, tables 36, 38 and 40 are loaded with values 0.6 times the input and tables 42, 44 and 46 are loaded with values 0.1 times the input.

As an example of color modification, reference is made to the standard color signal equations for television images taken from COLOR: Theory and Imaging Systems, Society of Photographic Scientists and Engineers.

$$RED_{out} \quad = \quad Y + 0.96I + 0.62Q$$

$$GREEN_{out} \quad = \quad Y - 0.27I - 0.65Q$$

$$BLUE_{out} \quad = \quad Y - 1.00I + 1.70Q$$

These equations represent the three signals that come into a color television set where Y represents luminance, I, in phase and Q, quadrature. It can be seen that with correct choices of table values $f_1 - f_9$ above, that correct red, green and blue values can be supplied to the display drivers, even if the memories contain Y, I, Q rather than R, G, B components of the image.

By manipulation of the nine constants of the three different equations, it is possible to provide color adjustment and modification. In accordance with the present invention, it is merely a matter of loading the nine correct constants, one each into each of the nine look-up tables connected between the memory and the summing circuits. With current electronic systems it is possible to load approximately 20,000 bytes of information for each new frame of the display 20. It is, therefore, possible to load the entire contents of the nine look-up tables between frames. If it were necessary to reload the entire memory, it would require several frames of the display before the entire memory was reloaded. In addition, if disc access time was considered to change the entire image, it would require several seconds for the reloaded memory to show on the screen. In other words, with the system according to the present invention, there is a reloading of 9 times 256 bytes in the look-up tables rather than 3/4 million bytes in the memory.

It should be noted that since some color components are negative with reference to the television color signal equations, the summing circuitry is presumed to include circuitry to add positive or negative numbers, including an extra bit in all tables to signify the sign, if necessary. It should also be noted that a byte in the illustration has been considered to be 8 bits, but that such a system could easily accommodate any other number of bits to represent a tone value.

This technique can also simulate color correction masks in photographic printing. In photographic printing, however, densities rather than intensities are actually added. To simulate the density effect, the look-up tables would be logarithmic. This would require, therefore, three additional look-up tables 56, 58 and 60 connected to summing circuits 50, 52 and 54 respectively to perform the anti-log function. With this system, it is possible to do color correction, color masking, and other color modification, and changing the hue of the picture just by changing the numbers in the look-up tables, rather than changing all the numbers in the original picture memory.

Although the invention has been described with reference to three-color systems, it is within the purview of the present invention to provide colour correction in a system employing two colours (of which neither is black or white).

Claims:

1.　　　Apparatus for color correction of digitally displayed color images comprising:

　　　　a memory (22, 24) having a first color component and a second color component,

　　　　a first summing circuit (50) providing a first color signal,

　　　　a second summing circuit (59) providing a second color signal,

　　　　a first plurality of look-up tables (30, 32) of which one is connected between the first color component and the first summing circuit, and of which the other is connected between the first color component and the second summing circuit, and

　　　　a second plurality of look-up tables (36, 38) connected between the second color component and the first summing circuitry, and of which the other is connected between the second color component and the second summing circuit.

2.　　　The apparatus of Claim 1 wherein each look-up table contains 256 bytes of digital information identifying grey scale level.

3.　　　The apparatus of Claim 1 or 2, wherein each summing circuit provides a signal having a portion of the first color component and a portion of the second color component.

4.　　　A color correction digital image display system comprising

　　　　a first memory (22), a second memory (24) and a third memory (26), first summing circuitry (50) providing a first color signal, second summing circuitry (59) providing a second color signal, and third summing circuitry (54) providing a third color signal, and

　　　　a plurality of look-up tables (30, 32, 34, 36, 38, 40, 42, 44, 46) interconnecting each of the first, second and third memories to each of the first second and third summing circuits.

5.     The apparatus of Claim 4 wherein the plurality of look-up tables comprises nine look-up tables, of which three interconnect the first memory with each of the summing circuits, three interconnect the second memory with each of the summing circuits, and three interconnect the third memory to each of the summing circuits.

6.     The apparatus of Claim 4 or 5 wherein the summing circuits provide matrix multiplication giving red, green and blue signals, each of the signals having a red, green and blue component.

7.     The apparatus of any of Claims 4-6, including a look-up table (56) interconnecting the first summing circuit with the first color signal, a second look-up table (58) interconnecting the second color signal with a second summing circuit, and a third look-up table (60) interconnecting the third color signal with the third summing circuit.

8.     The apparatus of Claim 7 wherein each of the three look-up tables provides an anti-log function.

9.     Apparatus as claimed in any preceding claim, in which each look-up table is substituted by a multiplier.

10.     A method of color correction of a color image digitally stored in a memory comprising the steps of

providing a summing network (50, 54, 59) for each of the color components of the color image,

storing suitable color-correction information in a plurality of look-up tables (30, 32, 34, 36, 38, 40, 42, 44, 46) interconnecting each of the color components of the color image with each of a summing network, and,

modifying the information stored in the look-up tables to provide color correction.

11.     The method of Claim 10, including the step of interconnecting the summing networks to suitable anti-log look-up tables (56, 58, 60) to simulate density correction.

## FIG. 1
(PRIOR ART)

8 BIT/PIXEL

256 BYTES

| RED MEMORY | → | RED TABLE |
| 12 | | 14 |

| GREEN MEMORY | → | GREEN TABLE |
| 12 | | 16 |

| BLUE MEMORY | → | BLUE TABLE |
| 12 | | 18 |

DISPLAY
20

## FIG. 2
(PRIOR ART)

255

| 1 1 1 1 1 1 1 1 |
| 1 1 1 1 1 1 1 0 |
| 1 1 1 1 1 1 0 1 |

14

•
•
•

RED →

•
•
•

| 0 0 0 0 0 0 1 0 |
| 0 0 0 0 0 0 0 1 |
| 0 0 0 0 0 0 0 0 |

0

FIG. 3